# EUROPÄISCHE PATENTSCHRIFT

(11) **EP 0 408 709 B1**
(45) Veröffentlichungstag und Bekanntmachung des Hinweises auf die Patenterteilung: **09.06.1993**
(21) Anmeldenummer: 90902153.7
(22) Anmeldetag: 03.02.1990
(51) Int. Cl.: B60Q 3/02, B64D 11/00

(54) **DECKEN-GEPÄCKABLAGEN-KOMBINATION FÜR DIE PASSAGIERKABINE EINES FLUGZEUGES**
CEILING/LUGGAGE-RACK COMBINATION FOR THE PASSENGER CABIN OF AN AIRCRAFT
PLAFOND ET COMPARTIMENT A BAGAGES COMBINES POUR LES CABINES D'AVION

(30) Priorität: 06.02.1989 DE 3903491; 14.02.1989 DE 3904375
(43) Veröffentlichungstag der Anmeldung: 23.01.1991
(73) Patentinhaber: Deutsche Aerospace Airbus Gesellschaft mit beschränkter Haftung, 21129 Hamburg (DE)
(72) Erfinder: MANTHEY, Heinz, D-2100 Hamburg 90 (DE); GLIMMANN, Hans, D-2152 Horneburg (DE); TYBURSKI, Gustav, D-2160 Stade (DE); SCHULTZ, Holger, D-2000 Hamburg 63 (DE); PROBST, Arne, D-2103 Hamburg 95 (DE); POPPINGA, Georg, D-2083 Halstenbeck (DE); NOCON, Günther, D-2150 Buxtehude (DE); BOCK, Thomas-Mathias, D-2101 Hamburg 96 (DE); SCHWERTFEGER, Günter, D-2150 Buxtehude (DE)
(86) Internationale Anmeldenummer: DE9000074
(87) Internationale Veröffentlichungsnummer: WO9008674

(56) Entgegenhaltungen:
- US-A- 2 582 738
- US-A- 2 595 858
- US-A- 3 535 505

## Beschreibung

Die Erfindung bezieht sich auf eine Kombination nach dem Oberbegriff des Anspruchs 1.

Derartige Kombinationen bilden den oberen Bereich der Passagierkabine eines Flugzeuges und bestehen im wesentlichen aus den Gepäckablagen sowie der Decke, die den oberen Bereich der Kabinen-Innenverkleidung bildet. Im Bereich der Decke bzw. der Gepäckablagen sind auch die Leuchtstofflampen für die Beleuchtung der Kabine angeordnet. Eine Passagierkabine mit zwei Längsgängen weist eine mittlere und zwei seitliche mit Klappen versehene Gepäckablagen auf. Zur Beleuchtung werden mit lichtdurchlässigen Abdeckungen versehene Leuchtstofflampen verwendet, wovon je Längsgang zwei sog. Lichtbänder angeordnet sind. Die seitlichen Gepäckablagen sind aus Platzgründen so ausgebildet, daß sie nur kleine Gepäckstücke sicher aufnehmen können. Insbesondere aufgrund der relativ hohen Anzahl von Leuchtstofflampen ergeben sich hohe Herstellkosten der besagten Kombination.

Durch die US-A-3,535,505 ist ein Leuchtstofflampensystem bekannt, wie es beispielsweise für große Flugzeugpassagierkabinen verwendbar ist, wobei Reflektoren zur Beseitigung von Endschatten dienen. Hierdurch werden die jeweils zwischen zwei Leuchtstofflampen befindlichen Stoßbereiche aufgehellt. Dieser Druckschrift ist jedoch nirgends ein Hinweis zu entnehmen, die Kabinendecke und die Gepäckablagen so auszubilden, daß die Anzahl der Leuchtstofflampen reduziert wird.

Demgemäß liegt der Erfindung die Aufgabe zugrunde, eine gattungsgemäße Kombination derart auszubilden, daß je Längsgang ein Lichtband eingespart und die hierdurch bedingte geringere Beleuchtungsdichte durch optisch wirksame Maßnahmen weitgehend ausgeglichen wird.

Diese Aufgabe wird bei einer gattungsgemäßen Kombination durch die kennzeichnenden Merkmale des Patentanspruchs 1 gelöst.

Dabei ist insbesondere von Vorteil, daß im Gefolge des Wegfalls der Hälfte aller Leuchtstofflampen auch eine entsprechende Anzahl von Vorschaltgeräten entfällt. Hierdurch ergibt sich nicht nur eine Reduzierung der Herstellkosten, sondern auch eine erhebliche Gewichtsreduzierung.

Vorteilhafte Weiterbildungen der Erfindung sind in den Unteransprüchen angegeben.

So besteht ein Vorteil der Ausgestaltungen nach den Ansprüchen 2 und 3 darin, daß die Kombination den Gegebenheiten des Flugzeuges gestalterisch angepaßt werden kann.

Ein Vorteil der Ausgestaltung nach Anspruch 4 besteht darin, daß sich günstige Reflexionswinkel ergeben und außerdem der gesamte Deckenbereich optisch einen geräumigen Eindruck vermittelt.

Die Erfindung ist in der Zeichnung dargestellt und in der Beispielbeschreibung näher erläutert. Es zeigen
- Fig. 1: einen Schnitt durch eine Decken-Gepäckablagen-Kombination mit zentral angeordneten Leuchtstofflampen,
- Fig. 2: eine Kombination nach Fig. 1 mit geöffneten Gepäckklappen,
- Fig. 3: einen Schnitt, entsprechend Fig. 1, mit einer Darstellung der Lichtverhältnisse,
- Fig. 4: eine Kombination mit seitlich angeordneten Leuchtstofflampen,
- Fig. 5: den Kurvenverlauf des Deckenelementes nach Fig. 1 und
- Fig. 6: die Tabelle der Koordinaten des Kurvenverlaufes nach Fig. 4.

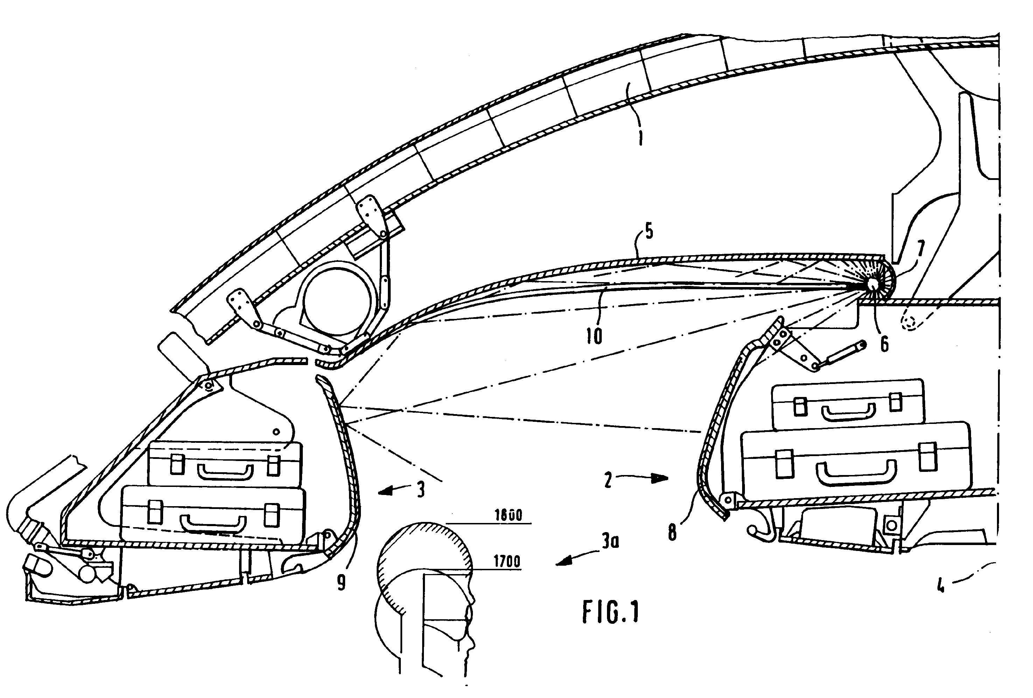

Fig. 1 zeigt mit Blick in Flugrichtung einen Schnitt durch eine Flugzeug-Passagierkabine. Im Bild ist nur der linke Teil des oberen Kabinenbereiches zu sehen. Die zur Mittelebene 4 der Kabine symmetrische rechte Hälfte dieses Bereiches ist nicht dargestellt. Man sieht eine Rumpfstruktur 1, eine zentrale Gepäckablage 2 mit einer Klappe 8 und eine seitliche Gepäckablage 3 mit einer Klappe 9. Der zwischen den Gepäckablagen 2,3 befindliche Bereich wird nach oben durch in Längsrichtung aneinandergefügte gleich ausgebildete Deckenelemente 5 abgeschlossen. Wie die Deckenelemente 5 so ist auch eine Vielzahl von Gepäckablagen 2,3 in Kabinenlängsrichtung aneinandergereiht. Unterhalb der Deckenelemente 5 befindet sich jeweils ein Längsgang. Jedem Deckenelement 5 ist eine Leuchtstofflampe 6 zugeordnet, die sich im wesentlichen über die gesamte angrenzende Kante des Elementes 5 erstreckt. Das Deckenelement 5 ist annähernd parabolisch gekrümmt, wobei sich dessen weniger stark gekrümmter Bereich zur Leuchtstofflampe 6 hin erstreckt. Der Strahlengang des von der Lampe 6 ausgehenden Lichtes ist teilweise eingezeichnet. Hierdurch ist zu erkennen, daß die unterhalb der Leuchtstofflampe 6 angeordnete Klappe 8 der zentralen Gepäckablage 2 als Blende wirkt, so daß nur das Deckenelement 5 und die seitliche Gepäckablage 3 direkt angestrahlt werden. Zur Erhöhung der Lichtausbeute ist auf der dem Deckenelement 5 abgewandten Seite der Leuchtstofflampe 6 ein Reflektor 7 angeordnet, der das von der Leuchtstofflampe 6 ausgehende Licht zum Deckenelement 5 hin reflektiert. Um die Wirksamkeit der Beleuchtung weiter zu erhöhen, weisen die Klappen 8 und 9 jeweils eine Schräglage derart auf, daß ihr gegenseitiger Abstand nach oben zunimmt. Auf diese Weise wird eine indirekte Beleuchtung der Kabine erreicht, wobei das nach unten in die Kabine fallende Licht im wesentlichen von den Deckenelementen 5 und den Klappen 8,9 ausgeht. Jedes Deckenelement 5 wird in Flugzeug-Längsrichtung nach hinten und nach vorn jeweils durch eine nach unten gezogene Kante 10 von geringer Breite begrenzt.

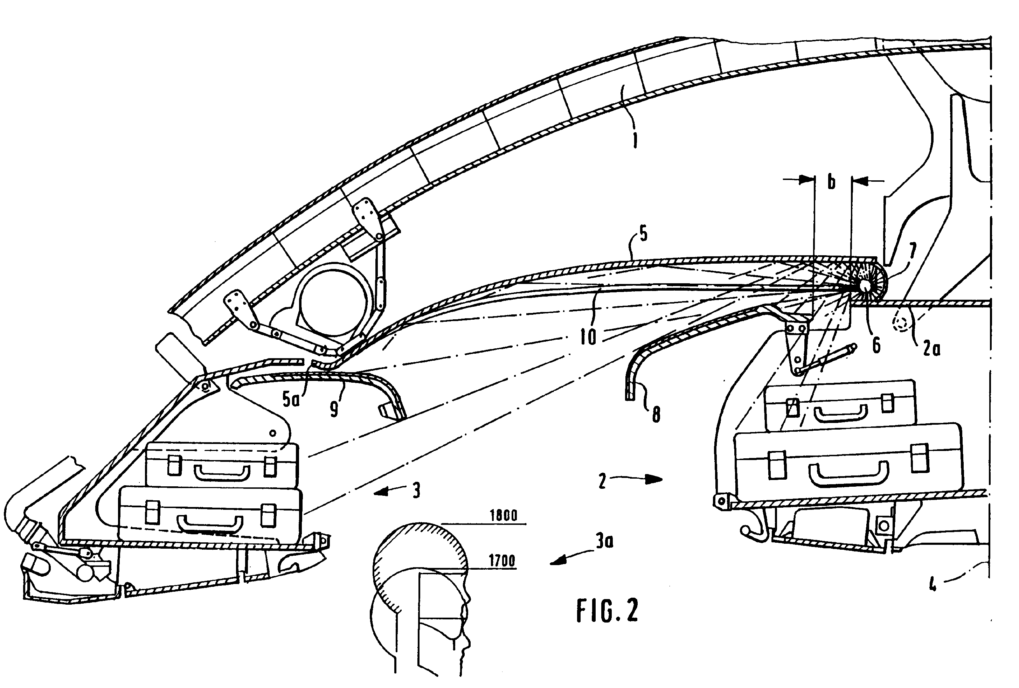

Fig. 2 zeigt die Kombination nach Fig. 1 mit den vorgenannten Elementen, jedoch mit geöffneten Gepäckklappen 8 und 9. Die Gepäckablage 2 ist nach oben durch eine Wandung 2a abgeschlossen, wobei zwischen deren Vorderkante und der Oberkante der Gepäckklappe 8 in geöffnetem Zustand ein Spalt von der Breite b besteht. Das Bild zeigt, daß in den betreffenden Stellungen der Klappen 8 und 9 die Innenräume der Gepäckablagen 2 und 3 gut ausgeleuchtet sind, wodurch die Ablage von Gepäck erleichtert wird. So fällt Licht durch den zwischen der Klappe 8 und der Wandung 2a bestehenden Spalt ins Innere der Gepäckablage 2. Die Gepäckablage 3 wird vom Deckenelement 5 her mit vorwiegend indirektem Licht angestrahlt. Im Falle, daß die Gepäckablage 2 geschlossen ist, erhält die Ablage 3 auch direktes Licht von der Leuchtstofflampe 6 her.

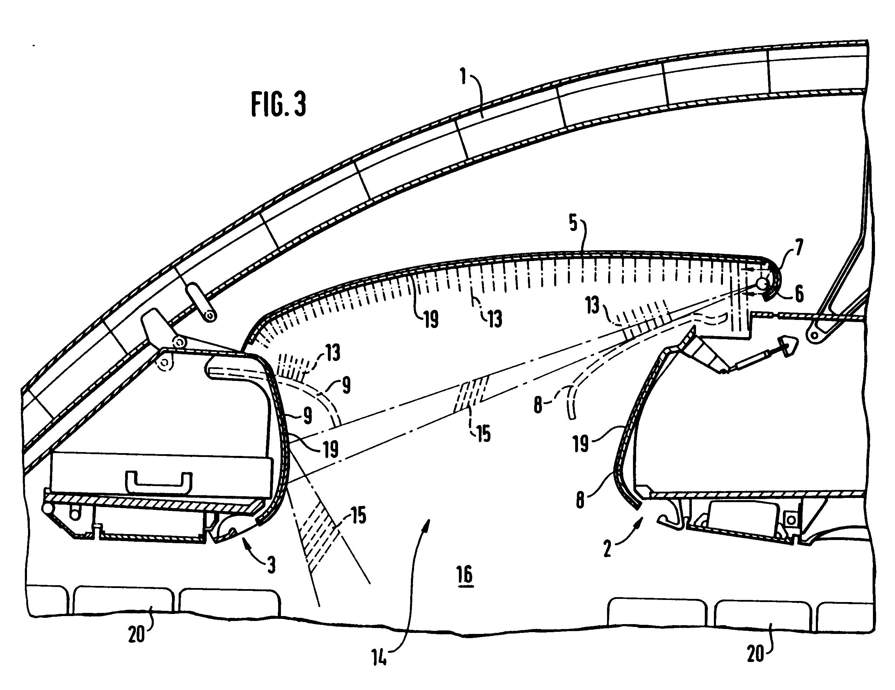

Fig. 3 zeigt wieder einen Schnitt gemäß Fig. 1 mit der Rumpfstruktur 1, den Gepäckablagen 2 und 3 mit den Klappen 8 und 9, dem Deckenelement 5, der Leuchtstofflampe 6 sowie dem Reflektor 7. Innerhalb des Passagierraumes 14 sind die Passagiersitze 20 angeordnet, wovon hier nur die oberen Bereiche der Rückenlehnen zu sehen sind. Unterhalb des Deckenelementes 5 befindet sich der mit 16 bezeichnete Längsgang. Das von der Leuchtstofflampe 6 ausgehende Licht wird von der konvex geformten Klappe 9 als direktes Licht 15 auf den Durchgang 16 des Passagierraumes 14 reflektiert. Die Leuchtstofflampe 6 ist so angeordnet, daß dies auch noch bei geöffneter Klappe 8 möglich ist. Weiterhin wird das auf die geöffnete Klappe 8 und auf die Klappe 9 abgestrahlte Licht von diesen zu den Deckenelementen 5 reflektiert. Ist die Klappe 9 geöffnet, so ist gewährleistet, daß der Innenraum der Gepäckablage 3 mittels des direkten Lichtes 15 ausgeleuchtet wird.

Die Klappen 8 und 9 sowie das Deckenelement 5 weisen eine Beschichtung 19 derart auf, daß die Helligkeit des reflektierten indirekten und direkten Lichtes 13,15 durch den Reflexionsgrad der aufgetragenen Beschichtung 19 bestimmt ist. Der Reflektor 7 ist derart in zwei Achsen zur Leuchtstofflampe 6 positionierbar, daß von diesem jeweils die entsprechende Lichtmenge auf die Deckenelemente 5,11 und auf die Klappen 8,9 abgestrahlt wird.

Eine andere Ausgestaltung der Erfindung besteht darin, daß der Reflektor entweder die Form einer Halbschale aufweist oder über unterschiedlich geformte Flächenabschnitte verfügt, die das Licht in unterschiedliche Richtungen abstrahlen.

Die Leuchtstofflampe 6 mit dem Reflektor 7 ist zweckmäßig derart oberhalb und tief hinter der rechten Gepäckablage 2 angeordnet, daß diese in normaler Stehhöhe nicht direkt einsehbar ist. In Fig. 1 ist die Position der Köpfe von Personen mit 1,7 bzw. 1,8 m Körpergröße entsprechend Pfeil 3a dargestellt.

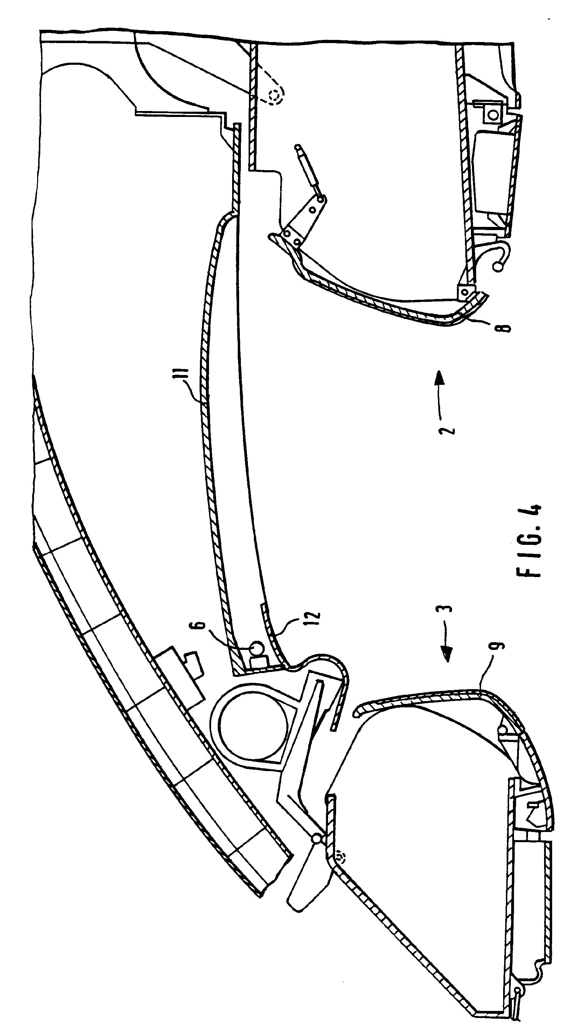

Fig. 4 zeigt eine andere Ausgestaltung der Erfindung, wobei die Leuchtstofflampe 6 nahe der seitlichen Gepäckablage 3 angeordnet ist. Diese Ausgestaltung besteht ebenfalls darin, daß je Deckenelement 11 eine Leuchtstofflampe 6 vorgesehen ist und das Deckenelement 11 annähernd parabolisch gekrümmt ist, wobei sich dessen weniger stark gekrümmter Bereich zur Leuchtstofflampe 6 hin erstreckt und die Leuchtstofflampe 6 derart durch eine Blende 12 abgedeckt ist, daß im wesentlichen indirektes Licht in die Kabine dringt, wobei wieder ein Reflektor vorgesehen ist, der hier jedoch nicht gezeigt ist. Die aus optischen Erwägungen eingeführte Schräglage der Gepäckklappen 8 und 9 hat insbesondere bei der seitlichen Gepäckablage 3 die vorteilhafte Wirkung, daß die hier abgelegten Gepäckstücke eine höhere Standfestigkeit zeigen. Hierdurch besteht eine geringere Neigung dieser Stücke, aus der Gepäckablage 3 herauszufallen.

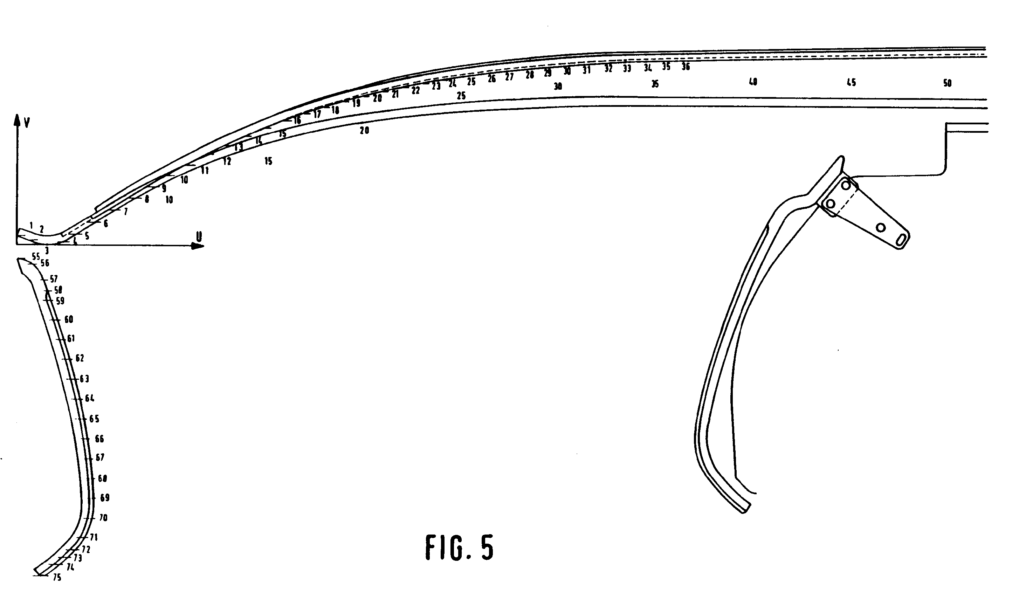

Fig. 5 zeigt den Verlauf der Konturlinie des Deckenelementes 5 nach den Figuren 1 und 2 mit dem hierzu in Beziehung gesetzten Mittelpunkt der Leuchtstofflampe 6. Die gezeigte Kurve wurde experimentell ermittelt und ergibt optimale Lichtverhältnisse bei der in den Figuren 1, 2 und 3 gezeigten Decken-Gepäckablagen-Kombination.

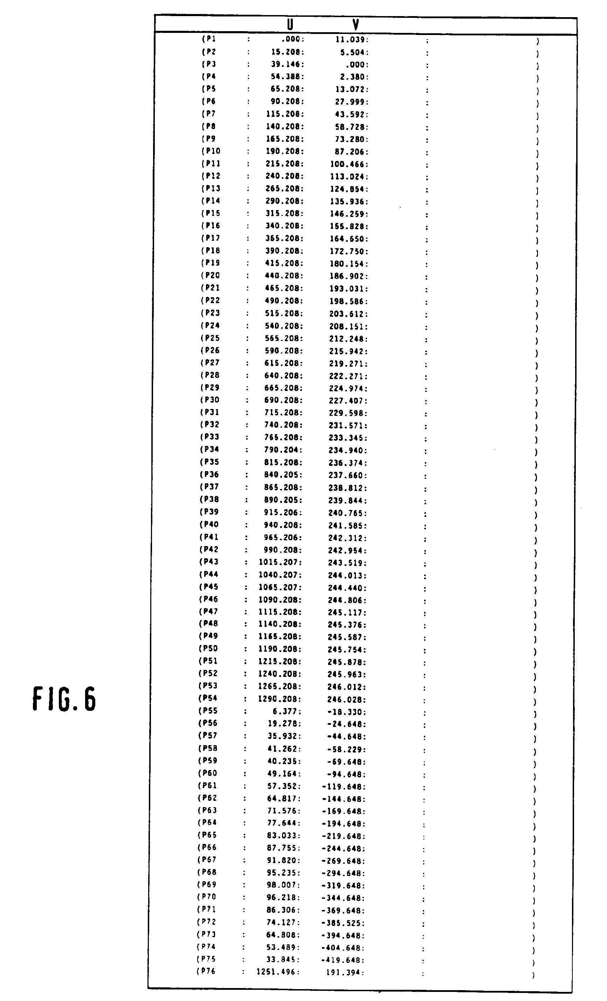

Fig. 6 zeigt in einer Tabelle die Koordinaten der Kurve nach Fig.5.

Die vorbeschriebenen Lösungen sind nicht an eine Leuchtstofflampe als Lichtquelle gebunden. Es ist darüber hinaus jede andere geeignete Lichtquelle verwendbar.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind.

## Patentansprüche

1. Decken-Gepäckablagen-Kombination für eine Flugzeug-Passagierkabine mit zwei Längsgängen (16), bestehend aus einer mittleren (2) und zwei seitlichen Gepäckablagen (3), die jeweils im oberen Bereich der Kabine angeordnet sind, wobei die Decke aus einzelnen gekrümmten Deckenelementen (5,11) besteht, die sich annähernd zwischen den Oberkanten der Gepäckablagen (2,3) erstrecken und die Kombination in Flugzeug-längsrichtung verlaufende röhrenförmige jeweils einem Deckenelement (5,11) zugeordnete Leuchtstofflampen (6) aufweist, dadurch **gekennzeichnet**, daß das Deckenelement (5,11) annähernd parabolisch gekrümmt ist, wobei sich dessen weniger stark gekrümmter Bereich zur !euchtstofflampe (6) hin erstreckt und die Leuchtstofflampe (6) derart durch eine Blende (12) abgedeckt ist, daß im wesentlichen indirektes licht in die Kabine dringt, wobei auf der dem Deckenelement (5,11) abgewandten Seite der Leuchtstofflampe (6) ein Reflektor (7) angeordnet ist, der das von der Leuchtstofflampe (6) ausgehende licht vorwiegend zum Deckenelement (5,11) hin reflektiert.

2. Kombination nach Anspruch 1, dadurch **gekennzeichnet,** daß die Leuchtstofflampe (6) oberhalb der mittleren Gepäckablage (2) angeordnet ist, wobei die Gepäckablage (2) als Blende wirkt.

3. Kombination nach Anspruch 1, dadurch **gekennzeichnet,** daß die Leuchtstofflampe (6) nahe der seitlichen Gepäckablage (3) angeordnet ist, wobei der Einfall direkten Lichtes in die Kabine mittels einer Blende (12) vermieden wird.

4. Kombination nach einem der Ansprüche 1 bis 3, dadurch **gekennzeichnet**, daß die Frontpartien der Gepäckklappen (8,9) eine Schräglage derart aufweisen, daß ihr gegenseitiger Abstand nach oben zunimmt.

5. Kombination nach einem der Ansprüche 1 bis 4, dadurch **gekennzeichnet**, daß zwischen der Vorderkante einer oberen Wandung (2a) und der Oberkante der Gepäckklappe (8) in geöffnetem Zustand ein Spalt von der Breite b besteht.

6. Kombination nach einem der Ansprüche 1 bis 5, dadurch **gekennzeichnet**, daß das Licht der Leuchtstofflampe (6) von der die Gepäckablage (3) verschließenden, konvex geformten Klappe (9) als direktes Licht (15) auf einen Durchgang (16) des Passagierraumes (14) reflektiert wird.

7. Kombination nach einem der Ansprüche 1 bis 6, dadurch **gekennzeichnet**, daß das auf die geöffnete Klappe (8) und auf die Klappe (9) abgestrahlte Licht von diesen zu den Deckenelementen (5,11) reflektiert wird.

8. Kombination nach einem der Ansprüche 1 bis 7, dadurch **gekennzeichnet**, daß der Innenraum der Gepäckablage (3) mittels des direkten Lichtes (15) bei geöffneter Klappe (9) ausgeleuchtet wird.

9. Kombination nach einem der Ansprüche 1 bis 8, dadurch **gekennzeichnet**, daß die Helligkeit des reflektierten indirekten und direkten Lichtes (13,15) durch den Reflexionsgrad einer entsprechend gewählten, auf die Deckenelemente (5,11) und die Klappen (8,9) aufgetragenen Beschichtung (19) bestimmt ist.

10. Kombination nach einem der Ansprüche 1 bis 9, dadurch **gekennzeichnet**, daß der Reflektor (7) derart in zwei Achsen zur Leuchtstofflampe (6) positionierbar ist, daß von diesem jeweils die entsprechende Lichtmenge auf die Deckenelemente (5,11) und auf die Klappen (8,9) abgestrahlt wird.

11. Kombination nach einem der Ansprüche 1 bis 10, dadurch **gekennzeichnet**, daß der Reflektor entweder die Form einer Halbschale aufweist oder über unterschiedlich geformte Flächenabschnitte verfügt, die das Licht in unterschiedliche Richtungen abstrahlen.

12. Kombination nach einem der Ansprüche 1 bis 11, dadurch **gekennzeichnet**, daß die Leuchtstofflampe (6) mit dem Reflektor (7) derart oberhalb und tief hinter der rechten Gepäckablage (2) angeordnet ist, daß die Leuchtstofflampe (6) in normaler Stehhöhe nicht direkt einsehbar ist.

13. Kombination nach einem der Ansprüche 1 bis 12, dadurch **gekennzeichnet**, daß die Kontur des Deckenelementes (5,11) die Koordinaten gemäß der Tabelle nach Fig 5 aufweist.

14. Kombination nach Anspruch 13, dadurch **gekennzeichnet**, daß die Kontur des Deckenelementes (5,11) innerhalb eines Bandes liegt, das sich ergibt, wenn man die Koordinaten gemäß der Tabelle gemäß Fig 5 plus/minus 5% nimmt.

15. Kombination nach einem der Ansprüche 1 bis 14, dadurch **gekennzeichnet**, daß anstelle der Leuchtstofflampe (6) eine Lichtquelle beliebiger Art verwendet wird.

## Claims

1. A ceiling/luggage compartment combination for an aircraft passenger cabin with two longitudinal gangways (16), consisting of a middle (2) and two side luggage compartments (3), which are each arranged in the upper region of the cabin, in which the ceiling consists of individual curved ceiling elements (5, 11) which extend substantially between the upper edges of the luggage compartments (2,3) and the combination comprises tubular fluorescent lights (6) running longitudinally of the aircraft and each associated with a ceiling element (5,11), characterised in that the ceiling element (5,11) is curved substantially parabolically, its less strongly curved region extending to the fluorescent light (6) and the fluorescent light (6) is covered by a shield (12) such that essentially indirect light enters the cabin, there being arranged on the side of the fluorescent light (6) remote from the ceiling element (5,11) a reflector (7), which reflects the light emitted by the fluorescent light (6) predominantly on to the ceiling element (5,11).

2. A combination according to claim 1, characterised in that the fluorescent light (6) is arranged above the middle luggage compartment (2), the luggage compartment (2) acting as a shield.

3. A combination according to claim 1, characterised in that the fluorescent light (6) is arranged adjacent to the side luggage compartment (3), the entry of direct light to the cabin being avoided by means of a shield (12).

4. A combination according to any one of claims 1 to 3, characterised in that the front parts of the luggage flaps (8,9) have an oblique position such that their mutual spacing increases upwardly.

5. A combination according to any one of claims 1 to 4, characterised in that between the front edge of an upper partition (2a) and the upper edge of the luggage flap (8) there occurs in the open condition a gap of width b.

6. A combination according to any one of claims 1 to 5, characterised in that the light from the fluorescent light (6) is reflected as direct light (15) from the convex flap (9) closing the luggage compartment (3) into a gangway (16) of the passenger space (14).

7. A combination according to any one of claims 1 to 6, characterised in that the light radiated onto the open flap (8) and onto the flap (9) is reflected by these to the ceiling elements (5,11).

8. A combination according to any one of claims 1 to 7, characterised in that the interior of the luggage compartment (3) is illuminated by means of the direct light (15) when the flap (9) is open.

9. A combination according to any one of claims 1 to 8, characterised in that the luminosity of the reflected indirect and direct light (13,15) is determined by the degree of reflection of a correspondingly selected coating (19) applied to the ceiling elements (5, 11) and the flap (8,9).

10. A combination according to any one of claims 1 to 9, characterised in that the reflector (7) can be positioned in two axes relative to the fluorescent light (6) so that in each case the corresponding amount of light is radiated on to the ceiling elements (5,11) and onto the flap (8,9).

11. A combination according to any one of claims 1 to 10, characterised in that reflector either has the shape of a half dish or has at its disposal surface sections of differing shapes, which radiate the light in different directions.

12. A combination according to any one of claims 1 to 11, characterised in that the fluorescent light (6) is so arranged with the reflector (7) above and well behind the right-hand luggage compartment (2) that the fluorescent light (6) is not directly visible at normal standing height.

13. A combination according to any one of claims 1 to 12, characterised in that the outline of the ceiling element (5,11) has the co-ordinates according to the Table of Fig. 5.

14. A combination according to claim 13 characterised in that the outline of the ceiling elements (5,11) lies within a band which results if the co-ordinates according to the Table are taken according to Fig. 5 plus/minus 5%.

15. A combination according to any one of claims 1 to 14, characterised in that instead of the fluorescent light (6) there is used a light source of any desired type.

## Revendications

1. Combinaison plafond-compartiment à bagages combinés pour les cabines d'avions à deux couloirs longitudinaux (16), avec un compartiment central (2) et deux compartiments latéraux (3) pour les bagages, qui sont chaque fois prévus dans la partie supérieure de la cabine, le plafond étant composé d'éléments de plafond (5, 11), courbes, séparés, qui s'étendent sensiblement entre les bords supérieurs des compartiments à bagages (2, 3) et la combinaison comprend des lampes luminescentes (6), prévus chaque fois dans un élément de plafond (5, 1) et qui sont alignés dans la direction longitudinale de l'avion, combinaison caractérisée en ce que l'élément de plafond (5, 11) a une courbure sensiblement parabolique et sa partie de moindre courbure s'étend en direction de la lampe (6), et cette lampe (6) est recouverte par un cache (12) de façon que la cabine reçoive pratiquement que de la lumière indirecte, et un réflecteur (7) est prévu sur le côté de la lampe (6), opposé à l'élément de plafond (5, 11), ce réflecteur réfléchissant la lumière émise par la lampe (6), de préférence vers l'élément de plafond (5, ).

2. Combinaison selon la revendication 1, caractérisée en ce que la lampe luminescente (6) est prévue au-dessus du compartiment à bagages (2), central, et ce compartiment (2) joue le rôle d'écran.

3. Combinaison selon la revendication 1, caractérisée en ce que la lampe luminescente (6) est prévue à proximité du compartiment à bagages (3), latéral, un écran (12) interdisant l'arrivée directe de lumière dans la cabine.

4. Combinaison selon l'une des revendications 1 à 3, caractérisée en ce que la partie frontale des volets (8, 9) des compartiments à bagages a une position inclinée telle que son écartement augmente vers le haut.

5. Combinaison selon l'une des revendications 1 à 4, caractérisée en ce qu'entre le bord avant d'une paroi supérieure (2a) et le bord supérieur du volet de compartiment (8), en position d'ouverture, il subsiste un intervalle de largeur (b).

6. Combinaison selon l'une des revendications 1 à 5, caractérisée en ce que la lumière de la lampe (6) est réfléchie par le volet (9) de forme convexe qui ferme le compartiment à bagages (3) sous forme de lumière indirecte (15) sur un couloir (16) de l'habitacle à passagers (14).

7. Combinaison selon l'une des revendications 1 à 6, caractérisée en ce que la lumière rayonnée vers le volet ouvert (8) et le volet (9) est réfléchie par ces volets vers les éléments de plafond (5, 11).

8. Combinaison selon l'une des revendications 1 à 7, caractérisée en ce que l'intérieur du compartiment à bagages (3) est éclairé par la lumière directe (15) lorsque le volet (9) est ouvert.

9. Combinaison selon l'une des revendications 1 à 8, caractérisée en ce que la clarté de la lumière réfléchie, indirecte et de la lumière directe (13, 15), est déterminée par le coefficient de réflexion d'un revêtement (19) choisi de manière appropriée et qui est appliqué sur les éléments de plafond (5, 11) et les volets (8, 9).

10. Combinaison selon l'une des revendications 1 à 9, caractérisée en ce que le réflecteur (7) peut être positionné suivant deux axes par rapport à la lampe (6) pour que la quantité de lumière émise par celle-ci soit dirigée vers les éléments de plafond (5, 11) et les volets (8, 9).

11. Combinaison selon l'une des revendications 1 à 10, caractérisée en ce que le réflecteur possède la forme d'une demi-coquille ou dispose de segments de surface de formes différentes qui émettent la lumière dans des directions différentes.

12. Combinaison selon l'une des revendications 1 à 11, caractérisée en ce que la lampe (6) avec le réflecteur (7) est disposée au-dessus et très loin derrière le compartiment à bagages (2), droit, pour que la lampe (6) ne puisse être vue directement par une personne en position debout, normale.

13. Combinaison selon l'une des revendications 1 à 12, caractérisée en ce que le contour de l'élément de plafond (5, 11) possède des coordonnées correspondant au tableau de la figure 5.

14. Combinaison selon la revendication 13, caractérisée en ce que le contour de l'élément de plafond (5, 11) se situe à l'intérieur d'une bande que l'on obtient lorsqu'on choisit les coordonnées selon le tableau de la figure 5 avec plus ou moins 5 % .

15. Combinaison selon l'une des revendications 1 à 14, caractérisée en ce qu'à la place d'une lampe luminescente (6) on utilise n'importe quelle source lumineuse.
